# FASCICULE DE BREVET EUROPEEN

(11) **EP 4 073 366 B1**
(45) Date de publication et mention de la délivrance du brevet: **21.02.2024**
(21) Numéro de dépôt: 20845181.5
(22) Date de dépôt: 11.12.2020
(51) Int. Cl.: F02C 7/06, F01D 25/18, F02C 7/36, F02K 3/06

(54) **SYSTÈME PROPULSIF AÉRONAUTIQUE À FAIBLE DÉBIT DE FUITE ET RENDEMENT PROPULSIF AMÉLIORÉ**
AERONAUTISCHES ANTRIEBSSYSTEM MIT NIEDRIGER LECKRATE UND VERBESSERTER ANTRIEBSEFFIZIENZ
AERONAUTIC PROPULSION SYSTEM WITH LOW LEAKAGE RATE AND IMPROVED PROPULSION EFFICIENCY

(30) Priorité: 11.12.2019 FR 1914193
(43) Date de publication de la demande: 19.10.2022
(73) Titulaire: SAFRAN AIRCRAFT ENGINES, 75015 Paris (FR); Safran Transmission Systems, 92700 Colombes (FR)
(72) Inventeur: FRANTZ, Caroline Marie, 77550 MOISSY-CRAMAYEL (FR); CHARIER, Gilles Alain Marie, 77550 MOISSY-CRAMAYEL (FR); GROS-BOROT, Maeva Daphné, 77550 MOISSY-CRAMAYEL (FR); FOGLIA, Matthieu Bruno, François, 77550 MOISSY-CRAMAYEL (FR); SIMON, Adrien Louis, 77550 MOISSY-CRAMAYEL (FR)
(74) Mandataire: Regimbeau
(86) Numéro de dépôt international: PCT/FR2020/052392
(87) Numéro de publication internationale: WO 2021/116622

(56) Documents cités:
- CA-A1- 2 950 551
- US-A- 4 251 987
- US-A1- 2018 291 819

## Description

### DOMAINE DE L'INVENTION

La présente invention concerne le domaine des systèmes propulsifs aéronautiques, et plus précisément des systèmes propulsifs à double flux présentant un taux de dilution élevé, voire très élevé, et un haut rendement propulsif.

### ETAT DE LA TECHNIQUE

Un système propulsif à double flux comprend généralement, d'amont en aval dans le sens de l'écoulement des gaz, une soufflante, un espace annulaire d'écoulement primaire et un espace annulaire d'écoulement secondaire. La masse d'air aspirée par la soufflante est donc divisée en un flux primaire, qui circule dans l'espace d'écoulement primaire, et en un flux secondaire, qui est concentrique avec le flux primaire et circule dans l'espace d'écoulement secondaire. La soufflante (ou hélice) peut être carénée et logée dans un carter de soufflante ou en variante non carénée du type USF (acronyme anglais de Unducted Single Fan, pour soufflante unique non carénée). Les aubes de soufflante peuvent être fixes ou présenter un calage variable, le calage étant ajusté en fonction des phases de vol par un mécanisme de changement de pas.

L'espace d'écoulement primaire traverse un corps primaire comprenant un ou plusieurs étages de compresseurs, par exemple un compresseur basse pression et un compresseur haute pression, une chambre de combustion, un ou plusieurs étages de turbines, par exemple une turbine haute pression et une turbine basse pression, et une tuyère d'échappement des gaz. Typiquement, la turbine haute pression entraine en rotation le compresseur haute pression par l'intermédiaire d'un premier arbre, dit arbre haute pression, tandis que la turbine basse pression entraine en rotation le compresseur basse pression et la soufflante par l'intermédiaire d'un deuxième arbre, dit arbre basse pression. L'arbre basse pression est généralement logé dans l'arbre haute pression.

Afin d'améliorer le rendement propulsif du système propulsif et de réduire sa consommation spécifique ainsi que le bruit émis par la soufflante, il a été proposé des systèmes propulsifs présentant un taux de dilution (bypass ratio en anglais), c'est-à-dire le rapport entre le débit du flux secondaire et le débit du flux primaire, élevé. Par taux de dilution élevé, on comprendra ici un taux de dilution supérieur ou égal à 10, par exemple compris entre 10 et 80 inclus. Pour atteindre de tels taux de dilution, la soufflante est découplée de la turbine basse pression, permettant ainsi d'optimiser indépendamment leur vitesse de rotation respective. Généralement, le découplage est réalisé à l'aide d'un réducteur tel qu'un mécanisme de réduction épicycloïdal ou planétaire, placé entre l'extrémité amont de l'arbre basse pression et la soufflante. La soufflante est alors entrainée par l'arbre basse pression par l'intermédiaire du mécanisme de réduction et d'un arbre supplémentaire, dit arbre de soufflante, qui est fixé entre le mécanisme de réduction et le disque de la soufflante.

Ce découplage permet ainsi de réduire la vitesse de rotation et le rapport de pression de la soufflante et d'augmenter la puissance extraite par la turbine basse pression. En effet, l'efficacité globale des systèmes propulsifs aéronautiques est conditionnée au premier ordre par le rendement propulsif, qui est favorablement influencé par une minimisation de la variation d'énergie cinétique de l'air à la traversée du système propulsif. Dans un système propulsif à taux de dilution élevé, l'essentiel du débit générant l'effort propulsif est constitué par le flux secondaire du système propulsif, l'énergie cinétique du flux secondaire étant majoritairement affecté par la compression qu'il subit lors de la traversée de la soufflante. Le rendement propulsif et le rapport de pression de la soufflante sont donc liés : plus le rapport de pression de la soufflante est faible, meilleur sera le rendement propulsif.

Au-delà de son impact majeur sur le rendement propulsif, le choix du rapport de pression de la soufflante influence également diverses caractéristiques technologiques du système propulsif, dont le diamètre de la soufflante (et par extension les dimensions externes du système propulsif et de sa nacelle, masse et traînée), le régime de rotation de la soufflante et le rapport de réduction du mécanisme de réduction.

Toutefois, (i) plus le rapport de réduction augmente et plus son encombrement radial augmente de sorte que le mécanisme de réduction s'intègre difficilement sous la veine d'écoulement primaire et (ii) plus la vitesse de l'arbre basse pression est élevée, plus la vitesse du compresseur basse pression, qui est entrainé par l'arbre basse pression, est élevée et plus le rayon moyen du compresseur basse pression doit être bas pour limiter la vitesse périphérique en sommet des aubages du compresseur basse pression.

Ces deux contraintes combinées conduisent à un canal d'entrée de la veine d'écoulement primaire (habituellement désigné par sa forme en col de cygne) en amont du compresseur basse pression présentant une pente d'autant plus importante que l'encombrement radial du mécanisme de réduction est élevé et le rayon moyen du compresseur basse pression est bas. Il en résulte un accroissement des pertes aérodynamiques dans ce canal et une mauvaise alimentation du compresseur basse pression qui portent préjudice au rendement propulsif du système propulsif.

Actuellement, les mécanismes de réduction privilégiés sont du type réducteur épicycloïdal, dans lesquels la soufflante est entrainée par le porte-satellite, la couronne étant fixée au stator du moteur. De telles architectures permettent en effet d'atteindre des rapports de réduction plus élevés que les mécanismes de réduction du type planétaire (entrainement de la soufflante par la couronne). L'utilisation d'un réducteur épicycloïdal implique cependant de transférer l'huile du repère fixe du moteur vers le repère tournant du porte-satellites pour alimenter les paliers et dentures de ce réducteur. En outre, dans le cas d'un système propulsif comprenant un mécanisme de changement de pas des aubes de soufflante, il est également nécessaire de transférer l'alimentation d'huile du mécanisme de changement de pas d'un repère fixe (groupe de lubrification) du système propulsif à un repère tournant de la soufflante. Pour cela, il est connu d'utiliser un OTB (acronyme anglais de Oil Transfer Bearing, pour joint hydraulique tournant multi-passage ou transfert d'huile tournant), qui comprend une partie fixe par rapport à une partie stator du système de propulsion et qui est connectée, via des canalisations dédiées, au groupe de lubrification comprenant un réservoir d'huile et une pompe, et une partie tournante qui est solidaire en mouvement d'une partie rotor du système de propulsion. Typiquement, dans le cas où le mécanisme de réduction comprend un réducteur épicycloïdal, la partie tournante de l'OTB est montée sur l'arbre basse pression, en en aval du réducteur (par rapport au sens d'écoulement des gaz dans le système propulsif) et l'huile est ensuite transférée via des canalisations passant au travers du porte-satellites du réducteur, qui est fixe. L'OTB est donc contraint en rayon par le diamètre de l'arbre basse pression, ce qui implique des fuites importantes (le débit de fuite étant proportionnel au rayon de l'OTB) et donc une faible durée de vie pour ce composant. De plus, l'OTB est inaccessible lors d'une opération de maintenance puisqu'il est en aval du réducteur. En cas de défaillance, il est donc nécessaire de démonter le réducteur pour pouvoir accéder à l'OTB.

Les documents CA 2 950 551 et US 2018/291819 décrivent des turbomachines comprenant un mécanisme de réduction.

### EXPOSE DE L'INVENTION

Un but de l'invention est de proposer un système propulsif aéronautique, tel qu'une turbomachine à double flux dont la soufflante est carénée, avec ou sans calage variable des aubes de soufflante, ou qu'un système propulsif non caréné du type USF, présentant un taux de dilution élevé et un rendement propulsif amélioré et dont le système de lubrification est simplifié.

Il est à cet effet proposé, selon un premier aspect de l'invention un système propulsif aéronautique comprenant :
- un arbre d'entrainement mobile en rotation autour d'un axe de rotation,
- une soufflante,
- un arbre de soufflante configuré pour entrainer la soufflante en rotation autour de l'axe de rotation,
- un mécanisme de réduction couplant l'arbre d'entrainement et l'arbre de soufflante et comprenant deux étages de réduction comportant :
- un pignon solaire, centré sur l'axe de rotation et configuré pour être entrainé en rotation par l'arbre d'entrainement,
- une couronne, coaxiale avec le pignon solaire et configurée pour entrainer en rotation l'arbre de soufflante autour de l'axe de rotation, et
- une série de satellites répartis circonférentiellement autour de l'axe de rotation entre le pignon solaire et la couronne, chaque satellite comprenant une première portion formant le premier étage de réduction engrenée avec le pignon solaire et une deuxième portion formant le deuxième étage de réduction engrenée avec la couronne, un diamètre de la première portion étant différent d'un diamètre de la deuxième portion.

De plus, le système propulsif comprend un transfert d'huile tournant positionné entre la soufflante et le mécanisme de réduction.

Certaines caractéristiques préférées mais non limitatives du système propulsif selon le premier aspect sont les suivantes, prises individuellement ou en combinaison :
- la série de satellites est montée sur un porte-satellites qui est fixe par rapport à une partie stator du système propulsif et le système propulsif comprend en outre un réservoir d'huile et au moins une canalisation, la canalisation connectant fluidiquement le réservoir d'huile au transfert d'huile tournant en passant entre les satellites.
- le transfert d'huile tournant comprend une partie tournante montée sur l'arbre de soufflante et une partie fixe montée sur le porte-satellites.
- le transfert d'huile tournant est positionné radialement à l'intérieur par rapport à l'arbre de soufflante.
- le joint hydraulique est plus proche de l'axe de rotation que l'arbre de soufflante.
- le système propulsif comprend en outre un mécanisme de changement de pas des aubes de la soufflante et une servitude connectant fluidiquement le transfert d'huile tournant au mécanisme de changement de pas.
- le mécanisme de réduction présente un rapport de réduction supérieur ou égal à 4.5.
- le système propulsif est non caréné et le rapport de réduction est supérieur ou égal à 6.
- la première portion et la deuxième portion des satellites comprennent chacune des dents hélicoïdales.
- les dents hélicoïdales de la première portion des satellites forme un angle compris entre 10° et 30° avec l'axe de rotation, de préférence compris entre 15° et 25°.
- les dents hélicoïdales de la deuxième portion des satellites forment un angle compris entre 10° et 30° avec l'axe de rotation.
- le système propulsif présente un taux de dilution supérieur ou égal à 10 et inférieur ou égal à 80.

Le système propulsif aéronautique selon le premier aspect peut comprendre une turbomachine à double flux dont la soufflante est carénée, avec ou sans calage variable des aubes de soufflante, ou un système propulsif non caréné du type USF.

Selon un deuxième aspect, l'invention propose un aéronef comprenant un système propulsif aéronautique conforme au premier aspect.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
La figure 1 illustre de façon schématique un exemple de système propulsif aéronautique comprenant une soufflante carénée à calage variable conforme à un mode de réalisation de l'invention.
La figure 2 illustre de façon schématique un exemple de système propulsif aéronautique comprenant une soufflante non carénée type USF conforme à un mode de réalisation de l'invention.
La figure 3 est une vue en coupe détaillée, partielle et schématique d'un exemple de mécanisme de réduction pouvant être utilisé dans un système propulsif aéronautique conforme à l'invention. Le canal d'entrée d'un système propulsif de l'art antérieur a en outre été représenté en pointillés sur cette figure.
La figure 4 est une vue schématique illustrant d'un côté (à gauche) un mécanisme de réduction planétaire biétage et d'un autre côté (à droite) un mécanisme de réduction épicycloïdal simple étage, pour un même rapport de réduction.

Sur l'ensemble des figures, les éléments similaires portent des références identiques.

### DESCRIPTION DETAILLEE DE L'INVENTION

Le système propulsif 1 comprend, de manière conventionnelle, une soufflante 2 et un corps primaire. Le corps primaire comprend, dans le sens d'écoulement des gaz dans le système propulsif 1, un canal d'entrée 3 s'étendant immédiatement en aval de la soufflante 2, un compresseur basse pression 4, un compresseur haute pression 5, une chambre de combustion 6, une turbine haute pression 7, une turbine basse pression 9 et une tuyère d'échappement des gaz. La turbine haute pression 7 entraine en rotation le compresseur haute pression 5 par l'intermédiaire d'un arbre haute pression 8 tandis que la turbine basse pression 9 entraine en rotation le compresseur basse pression 4 et la soufflante 2 par l'intermédiaire d'un arbre basse pression 10.

La soufflante 2 comprend un disque de soufflante 2 pourvu d'aubes de soufflante 11 à sa périphérie qui, lorsqu'elles sont mises en rotation, entraînent le flux d'air dans les espaces d'écoulement primaire et secondaire du système propulsif 1.

Le compresseur basse pression 4 comprend au moins un étage de compression comprenant une roue 14 d'aubes mobiles (rotor) entrainée par l'arbre basse pression 10 et tournant devant une série d'aubes fixes (stators, ou redresseurs) réparties circonférentiellement autour de l'axe X. Le cas échéant, le compresseur basse pression 4 peut comprendre au moins deux étages de compression.

Le canal d'entrée 3 s'étend immédiatement en aval de la soufflante 2. Il présente une entrée 18, adjacente au pied des aubes de soufflante 11, à l'aplomb du bec de séparation 19 de l'espace d'écoulement primaire et de l'espace d'écoulement secondaire et une sortie 20 adjacente au compresseur basse pression 4. Le canal d'entrée 3 présente la forme générale d'un col de cygne, de sorte que l'entrée 18 est radialement plus éloignée de l'axe de rotation X que la sortie 20. Le canal d'entrée 3 comprend, de manière connue en soi, roue directrice d'entrée (ou IGV, acronyme anglais d'Inlet Guide Vane) comprenant une rangée d'aubes fixes réparties circonférentiellement autour de l'axe X.

L'invention s'applique à tout type de système propulsif 1 aéronautique à double flux, que la soufflante 2 soit carénée ou non carénée, à aubes à calage fixes ou à calage variable.

Dans la présente demande, l'amont et l'aval sont définis par rapport au sens d'écoulement normal du gaz dans la soufflante et à travers le système propulsif. Par ailleurs, La direction axiale correspond à la direction de l'axe de rotation X et une direction radiale est une direction perpendiculaire à cet axe de rotation X et passant par lui. Par ailleurs, la direction circonférentielle (ou latérale) correspond à une direction perpendiculaire à l'axe de rotation X et ne passant pas par lui. Sauf précision contraire, interne (respectivement, intérieur) et externe (respectivement, extérieur), respectivement, sont utilisés en référence à une direction radiale de sorte que la partie ou la face interne d'un élément est plus proche de l'axe de rotation X que la partie ou la face externe du même élément.

Le système propulsif 1 présente un taux de dilution élevé. Par taux de dilution élevé, on comprendra ici un taux de dilution supérieur ou égal à 10, par exemple compris entre 10 et 31 dans le cas d'une soufflante 2 carénée et entre 40 et 80 dans le cas d'une soufflante 2 non carénée. Pour cela, la soufflante 2 est découplée de la turbine basse pression 9 pour optimiser indépendamment leur vitesse de rotation respective à l'aide d'un mécanisme de réduction 12 placé entre l'extrémité amont (par rapport au sens d'écoulement des gaz dans le système propulsif 1) de l'arbre basse pression 10 et la soufflante 2. La soufflante 2 est alors entrainée par l'arbre basse pression 10 par l'intermédiaire du mécanisme de réduction 12 et d'un arbre de soufflante 13, qui est fixé entre le mécanisme de réduction 12 et le disque de la soufflante 2. L'arbre de soufflante 13 est mobile en rotation autour d'un axe de rotation X coaxial à l'axe de rotation X de l'arbre basse pression 10.

Pour calculer le taux de dilution, le débit du flux secondaire et le débit du flux primaire sont mesurés lorsque le système propulsif 1 est stationnaire en régime de décollage dans une atmosphère standard (telle que définie par le manuel de l'Organisation de l'aviation civile internationale (OACI), Doc 7488/3, 3e édition) et au niveau de la mer.

Dans ce qui suit, tous les paramètres seront mesurés dans ces conditions, à savoir lorsque le système propulsif 1 est stationnaire en régime de décollage dans une atmosphère standard (telle que définie par le manuel de l'Organisation de l'aviation civile internationale (OACI), Doc 7488/3, 3e édition) et au niveau de la mer.

Afin d'améliorer le rendement propulsif du système propulsif 1 et de simplifier son système de lubrification, le mécanisme de réduction est planétaire et biétage et le système propulsif 1 comprend en outre un transfert d'huile 15 tournant (OTB) positionné entre la soufflante et le mécanisme de réduction.

Plus précisément, le mécanisme de réduction 12 comprend :
- un pignon solaire 33, centré sur l'axe de rotation X et configuré pour être entrainé en rotation par l'arbre basse pression 10, qui joue le rôle d'un arbre d'entrainement,
- une couronne 25, coaxiale avec le pignon solaire 33 et configurée pour entrainer en rotation l'arbre de soufflante 13 autour de l'axe de rotation X, et
- une série de satellites 28 répartis circonférentiellement autour de l'axe de rotation X entre le pignon solaire 33 et la couronne 25, chaque satellite 28 comprenant une première portion 38 engrenée avec le pignon solaire 33 et une deuxième portion 39 engrenée avec la couronne 25.

Les premières portions 38 des satellites 28 s'étendent dans un même plan et forment un premier étage 27 du mécanisme de réduction 12 tandis que les deuxièmes portions 39 des satellites 28 s'étendent dans un même plan, qui est parallèle à celui des premières portions 38, et forment le deuxième étage 32 du mécanisme de réduction 12.

En comparaison avec les moteurs de l'art antérieur, le système propulsif 1 présente, pour un rapport de réduction élevé, un mécanisme de réduction 12 d'encombrement plus faible. Il en résulte que la pente du canal d'entrée 3 de la veine primaire en amont du compresseur basse pression 4 est plus douce, ce qui améliore l'alimentation du compresseur basse pression 4 et permet de baisser le rayon du bec de séparation 19, et donc d'améliorer le taux de dilution. En parallèle, un rapport de réduction élevé permet de réduire la vitesse de rotation et le rapport de compression de la soufflante 2 et d'optimiser le dimensionnement de la turbine basse pression 9. Le rendement propulsif du système propulsif 1 est donc amélioré.

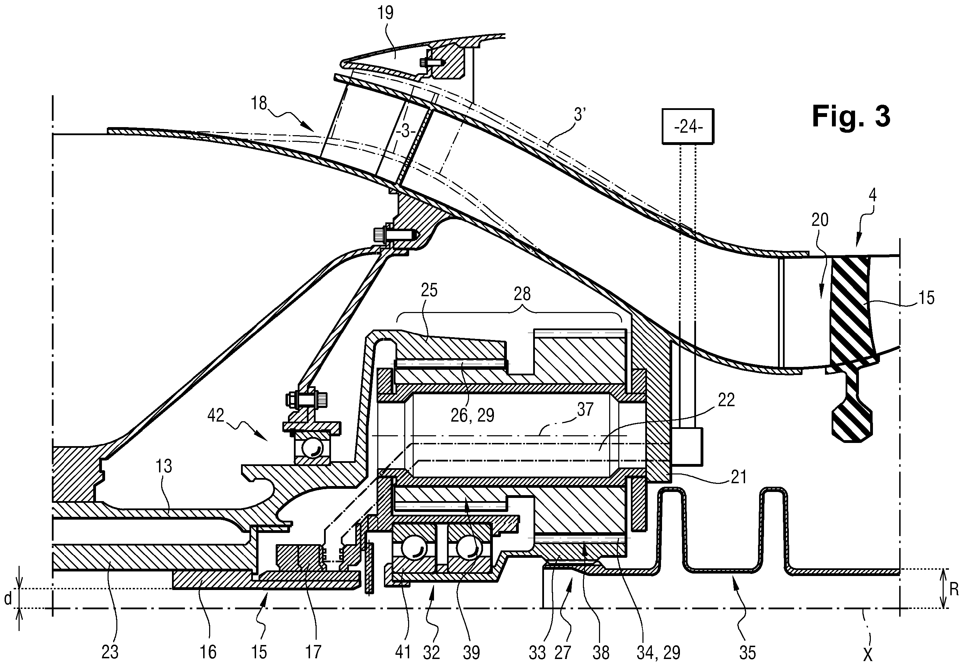

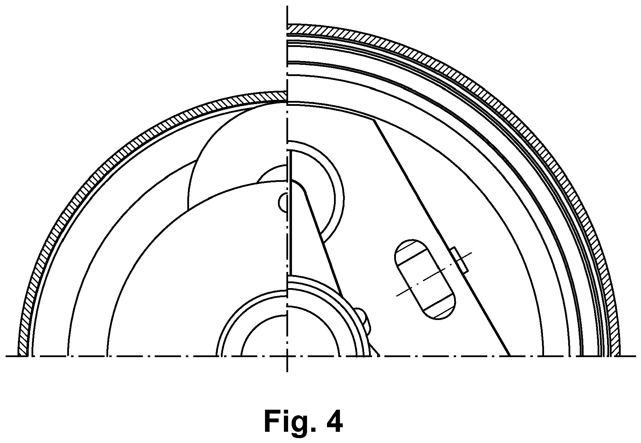

A titre de comparaison, la figure 4 illustre l'encombrement radial obtenu pour un mécanisme de réduction 12 planétaire biétage (à gauche sur la figure) et un mécanisme de réduction épicycloïdal simple étage (à droite de la figure), présentant tous les deux un même rapport de réduction. Il ressort de cette comparaison que le mécanisme de réduction présentant l'encombrement radial le plus faible, pour un même rapport de réduction, est le mécanisme de réduction 12 biétage planétaire. De même, on a illustré sur la figure 3 (en pointillés) la forme du canal d'entrée 3' lorsque le mécanisme de réduction est du type épicycloïdal simple étage (pour le même rapport de réduction). Comme cela ressort clairement sur cette figure 3, la pente du canal d'entrée 3' est nettement plus importante que celle du canal d'entrée 3 d'un système propulsif 1 comprenant un mécanisme de réduction 12 planétaire biétage, ce qui engendre des pertes aérodynamiques et réduit le rendement propulsif du système propulsif 1.

Le rapport de réduction du mécanisme de réduction biétage planétaire est au moins égal à 4.5.

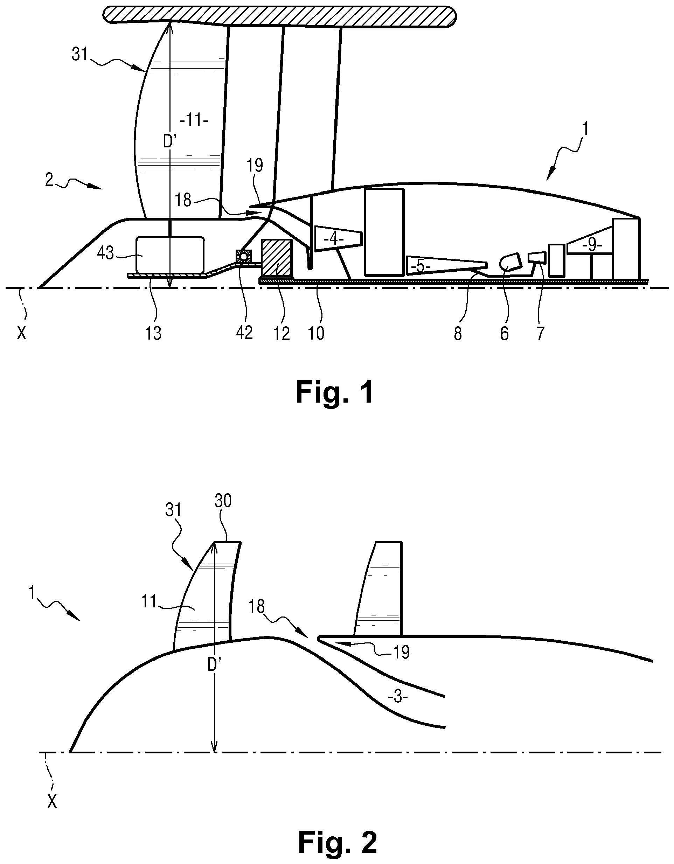

Dans le cas d'un système propulsif 1 comprenant une soufflante 2 carénée (Figure 1), et le cas échéant des aubes de soufflante 11 à calage variable, le rapport de réduction supérieur ou égal à 4.5, par exemple entre 4.5 et 6.

Dans le cas d'un système propulsif 1 comprenant une soufflante 2 non carénée (Figure 2), par exemple du type USF, le rapport de réduction supérieur ou égal à 6 et inférieur ou égal à 14, de préférence inférieur ou égal à 12, par exemple entre 7 et 10.

De plus, l'utilisation d'un mécanisme de réduction 12 du type planétaire permet de placer transfert d'huile 15 tournant en amont du mécanisme de réduction et de le raccorder fluidiquement au réservoir d'huile 24 du groupe de lubrification par l'intermédiaire de canalisations 22 passant entre les satellites 28. En d'autres termes, il n'est plus nécessaire de transférer l'huile du repère fixe du moteur vers un repère tournant du mécanisme de réduction 12 pour alimenter les paliers et dentures du mécanisme de réduction : il suffit en effet de transférer l'huile directement dans les canalisations 22 passant au travers du porte-satellites 21, qui est fixe par rapport à une partie stator du système propulsif 1, et d'alimenter ensuite les paliers et dentures 26, 29, 34 du mécanisme de réduction 12 depuis ces canalisations 22. Le cas échéant, la partie stator comprend une virole interne du canal d'entrée 3.

En outre, le transfert d'huile tournant étant placé en amont du mécanisme de réduction 12, il est plus facile d'accès, ce qui simplifie les opérations de maintenance. De plus, le transfert d'huile tournant 15 peut être placé plus proche de l'axe de rotation que lorsqu'il est en aval du mécanisme de réduction 12, puisqu'il n'est plus limité par le diamètre externe de l'arbre basse pression 10. En particulier, il est possible de positionner le transfert d'huile tournant 15 radialement à l'intérieur par rapport à l'arbre de soufflante 13 : en d'autres termes, le transfert d'huile tournant 15 est plus proche de l'axe de rotation X que l'arbre de soufflante 13. La distance d entre le transfert d'huile tournant 15 et l'axe de rotation X est donc nettement plus faible que lorsque le transfert d'huile tournant 15 est placé en aval du mécanisme de réduction 12, et notamment inférieure au rayon R de l'arbre basse pression 10. Les débits de fuite, qui sont proportionnels à la distance d à l'axe de rotation X, sont donc réduits, ce qui augmente drastiquement la durée de vie du transfert d'huile tournant 15.

La structure du transfert d'huile tournant 15 et son alimentation sont donc simplifiées.

Dans une forme de réalisation, le transfert d'huile tournant 15 comprend une partie tournante 16 montée (indirectement) sur l'arbre de soufflante 13 et une partie fixe 17 montée sur le porte-satellites 21.

Optionnellement, le système propulsif 1 comprend en outre un mécanisme de changement de pas 43 configuré pour modifier l'angle de calage des aubes de soufflante 11 en fonction des phases de vol du système propulsif. Ce mécanisme de changement de pas 43 nécessite alors des moyens d'actionnement (vérin hydraulique) alimentés en huile par le transfert d'huile tournant 15. Le système propulsif 1 donc comprend en outre des servitudes 23 d'alimentation d'huile s'étendant entre la partie tournante 16 du transfert d'huile tournant 15 et le mécanisme de changement de pas 43. Ces servitudes 23 sont solidaires en rotation de la partie tournante 16 du transfert d'huile tournant 15.

De plus, seule la portion du transfert d'huile tournant 15 alimentant les moyens d'actionnement du mécanisme de changement de pas 43 comprend une portion tournante, le transfert d'huile tournant 15 étant alimenté via les canalisations 22 passant par le porte-satellites 21, qui est fixe.

Dans une forme de réalisation, la couronne 25 comporte des premiers moyens d'engrènement 26, les satellites 28 comportent chacun des deuxièmes moyens d'engrènement 29 et le pignon solaire 33 comprend des troisièmes moyens d'engrènement 34. Ces premiers, deuxièmes et troisièmes moyens d'engrènement 26, 29 comprennent, de manière connue en soi, des dents droites ou hélicoïdales séparées deux à deux par une gorge.

Plus précisément, le pignon solaire 33 comprend une cannelure sur sa surface radiale interne configurée pour coopérer avec une cannelure correspondante formée sur l'extrémité amont 35 de l'arbre basse pression 10.

La couronne 25 est mobile par rapport au carter du système propulsif 1 est raccordée à une extrémité aval de l'arbre de soufflante 13 afin de l'entrainer en rotation autour de l'axe de rotation X.

Les satellites 28 sont montés sur le porte-satellites 21, qui est fixe par rapport au carter du système propulsif. Typiquement, le porte-satellites 21 peut être monté sur la virole interne du canal d'entrée 3. Chaque satellite 28 est monté mobile en rotation sur le porte-satellites 21 autour d'un axe de révolution 37 respectif, par exemple par l'intermédiaire de paliers lisses. Par ailleurs, chaque satellite 28 est symétrique de révolution par rapport à son axe de révolution 37. Le diamètre de la première portion 38 est différent du diamètre de la deuxième portion 39. Chaque portion 38, 39 des satellites 28 forme ainsi un étage 27, 32 du mécanisme de réduction 12.

Plus précisément, la première portion 38 de chaque satellite 28 est cylindrique de révolution par rapport à son axe de révolution 37 et présente une surface radiale externe configurée pour coopérer avec la surface radiale externe du pignon solaire 33. Pour cela, la surface radiale externe de cette première portion 38 comprend les deuxièmes moyens d'engrènement, typiquement des dents 29, configurées pour engrener les troisièmes moyens d'engrènement 34 du pignon solaire 33, typiquement des dents 34 s'étendant depuis la surface externe du pignon solaire 33.

La deuxième portion 39 de chaque satellite 28 est cylindrique de révolution par rapport à son axe de révolution 37 et présente une surface radiale externe configurée pour coopérer avec la surface radiale interne de la couronne 25. Pour cela, la surface externe de cette deuxième portion 39 comprend également les deuxièmes moyens d'engrènement, typiquement des dents 29, configurées pour engrener les dents 26 de la couronne 25.

La première portion 38 et la deuxième portion 39 de chaque satellite 28 sont monobloc. Par exemple, la première portion 38 et la deuxième portion 39 d'un même satellite 28 peuvent être formées intégralement et en une seule pièce (monolithique). En variante, la première portion 38 et la deuxième portion 39 d'un même satellite 28 peuvent être assemblées.

Par ailleurs, les satellites 28 d'un même mécanisme de réduction 12 sont identiques en forme et en dimension.

La mise en rotation du pignon solaire 33 par l'arbre basse pression 10 a donc pour effet d'entrainer les satellites 28 en rotation autour de leur axe de révolution 37, qui est fixe (le porte-satellites 21 étant fixé à la virole du carter d'entrée 3). La deuxième portion 39 des satellites 28 étant engrenée avec la couronne 25, qui est mobile, leur rotation autour de leur axe de révolution 37 a pour effet de mettre en rotation la couronne 25 autour de l'axe de rotation X. Enfin, l'arbre de soufflante 13 étant raccordé à la couronne 25, la rotation de la couronne 25 autour de l'axe de rotation X a pour effet d'entrainer l'arbre de soufflante 13 en rotation autour de cet axe de rotation X.

La deuxième portion 39 des satellites 28 présentant un diamètre différent de leur première portion 38,. Afin d'obtenir un rendement propulsif élevé, le diamètre de la deuxième portion 39 est strictement inférieur au diamètre de la première portion 38. C'est en effet la différence de diamètres entre la première portion 38 et la deuxième portion 39 des satellites 28 qui permet d'obtenir des rapports de réduction plus élevés que dans un mécanisme de réduction 12 simple étage, pour un encombrement radial comparable. Il en découle que le diamètre de la première portion 38 et le diamètre de la deuxième portion 39 des satellites 28 peuvent ainsi être dimensionnés de sorte à atteindre un rapport de réduction supérieur ou égal à 4.5 avec un encombrement radial faible, permettant ainsi d'adoucir la pente du canal d'entrée 3.

Par ailleurs, dans le cas d'un système propulsif 1 comprenant une soufflante 2 carénée, le diamètre D de la soufflante 2 peut être compris entre 105 pouces (266.7 cm) et 135 pouces (342,9 cm). Dans le cas d'un système propulsif 1 comprenant une soufflante 2 non carénée, le diamètre D de la soufflante 2 peut être compris entre 150 pouces (381 cm) et 180 pouces (457,2 cm), par exemple de l'ordre de 167 pouces (424,18 cm). Par diamètre D de soufflante 2, on comprendra ici le double de la distance, dans un plan radial à l'axe de rotation X, mesurée entre l'axe de rotation X et le sommet 30 des aubes de soufflante 11 à l'intersection entre le bord d'attaque 31 et le sommet 30 de l'aube 11. Par bord d'attaque 31, on comprendra ici le bord de l'aube 11 configuré pour s'étendre en regard de l'écoulement des gaz entrant dans la soufflante 2. Il correspond à la partie antérieure d'un profil aérodynamique qui fait face au flux d'air et qui divise l'écoulement d'air en un écoulement d'intrados et en un écoulement extrados. Le bord de fuite quant à lui correspond à la partie postérieure du profil aérodynamique, où se rejoignent les écoulements intrados et extrados.

De plus, pour ces diamètres D de soufflante 2 et régimes de rotation, le rapport de compression de la soufflante 2 carénée peut être compris entre 1.04 et 1.29 tandis que le rapport de pression de la soufflante 2 non carénée peut être compris entre 1.01 et 1.025. Le rapport de compression de la soufflante 2 est mesuré ici dans les mêmes conditions que le taux de dilution, c'est-à-dire lorsque le système propulsif 1 est stationnaire en régime de décollage dans une atmosphère standard (telle que définie par le manuel de l'Organisation de l'aviation civile internationale (OACI), Doc 7488/3, 3e édition) et au niveau de la mer.

Le taux de dilution du système propulsif 1 peut alors être compris entre 10 et 31 dans le cas d'une soufflante 2 carénée et entre 40 et 80 dans le cas d'une soufflante 2 non carénée.

La vitesse périphérique en tête des aubes de soufflante 11 (c'est-à-dire mesurée au niveau de leur sommet 30) en régime de décollage tel que défini ci-dessus est comprise entre 260 m/s et 330 m/s lorsque la soufflante 2 est carénée et est inférieure à 225 m/s lorsque la soufflante 2 est non carénée.

Dans une première forme de réalisation, les dents 26, 29, 34 du mécanisme de réduction 12 sont hélicoïdales.

Dans cette forme de réalisation, le mécanisme de réduction 12 comprend alors une butée interne 41, typiquement un palier à double billes ou une butée hydraulique, interposée entre le pignon solaire 33 et l'arbre de soufflante 13 et configurée pour reprendre les efforts axiaux générés entre l'arbre basse pression 10 et la première portion 38 des satellites 28. Par ailleurs, le système propulsif 1 comprend un palier de butée 42 au niveau de la soufflante 2, interposé entre l'arbre de soufflante 13 et une partie stator (fixe) du système propulsif 1 et configurée pour reprendre les efforts axiaux générés entre la deuxième portion 39 des satellites 28 et la couronne 25.

Optionnellement, la forme hélicoïdale des dents 26, 29, 34 du mécanisme de réduction 12 permet de limiter les efforts axiaux repris par le palier de butée 42. Le choix des angles d'hélice des dents 26, 29, 34 et leur orientation (signe) permet ainsi de compenser des efforts axiaux habituellement repris par le palier de butée 42. Par exemple, un angle d'hélice (par rapport à un plan comprenant l'axe de rotation X et l'axe de révolution 37 du satellite 28) des dents 29 de la deuxième portion 39 de chaque satellite 28 compris entre 10° et 30° permet à l'engrènement entre la couronne 25 et la deuxième portion 39 des satellites 28 de compenser les efforts de traction appliqués par la soufflante 2 sur le mécanisme de réduction 12. La taille du palier de butée 42 au niveau de la soufflante 2 peut donc être réduite grâce à la compensation de l'effort de traction appliqué par la soufflante 2 sur le mécanisme de réduction 12 par l'engrènement des dents hélicoïdales de la couronne 25 et de la deuxième portion 39 des satellites 28.

Par ailleurs, un angle d'hélice (par rapport à un plan comprenant l'axe de rotation X et l'axe de révolution 37 du satellite 28) des dents 29 de la première portion 38 de chaque satellite 28 compris entre 10° et 30°, de préférence entre 15° et 25°, permet de compenser les efforts au niveau de la butée interne 41 du mécanisme de réduction 12 et donc de réduire les pertes au niveau de cette butée 41.

On notera en outre que l'utilisation d'un mécanisme de réduction 12 biétage planétaire assouplit le dimensionnement du diamètre des cannelures de l'arbre basse pression 10. En effet, à iso-encombrement sous le canal d'entrée 3 du système propulsif 1, l'encombrement radial de la couronne 25 d'un mécanisme de réduction 12 biétage planétaire est réduit, ce qui permet, si besoin, d'augmenter le diamètre des cannelures sur l'extrémité amont 35 de l'arbre basse pression 10. A titre de comparaison, dans le cas d'un mécanisme de réduction simple étage, pour obtenir un rapport de réduction important, il est nécessaire de réduire le diamètre des cannelures de l'arbre basse pression pour respecter l'encombrement radial total du mécanisme de réduction 12 sous le canal d'entrée 3.

Dans une deuxième forme de réalisation, les dents 26, 29, 34 du mécanisme de réduction 12 sont droite. Dans cette forme de réalisation, la butée interne 41 est alors optionnelle.

## Revendications

1. Système propulsif (1) aéronautique comprenant :
- un arbre d'entrainement (10) mobile en rotation autour d'un axe de rotation (X),
- une soufflante (2),
- un arbre de soufflante (13) configuré pour entrainer la soufflante en rotation autour de l'axe de rotation (X),
- un mécanisme de réduction (12) couplant l'arbre d'entrainement (10) et l'arbre de soufflante (13),
le système propulsif (1) étant **caractérisé en ce que** le mécanisme de réduction (12) comprend deux étages de réduction (27, 32) comportant :
- un pignon solaire (33), centré sur l'axe de rotation (X) et configuré pour être entrainé en rotation par l'arbre d'entrainement (10),
- une couronne (25), coaxiale avec le pignon solaire (33) et configurée pour entrainer en rotation l'arbre de soufflante (13) autour de l'axe de rotation (X), et
- une série de satellites (28) répartis circonférentiellement autour de l'axe de rotation (X) entre le pignon solaire (33) et la couronne (25), chaque satellite (28) comprenant une première portion (38) formant le premier étage de réduction (27) engrenée avec le pignon solaire (33) et une deuxième portion (39) formant le deuxième étage de réduction (32) engrenée avec la couronne (25), un diamètre de la première portion (38) étant différent d'un diamètre de la deuxième portion (39),
et **en ce que** le système propulsif (1) comprend en outre un transfert d'huile tournant (15) positionné entre la soufflante et le mécanisme de réduction (12).

2. Système propulsif (1) selon la revendication 1, dans lequel la série de satellites (28) est montée sur un porte-satellites (21) qui est fixe par rapport à une partie stator (3) du système propulsif (1) et le système propulsif (1) comprend en outre un réservoir d'huile (24) et au moins une canalisation (22), la canalisation (22) connectant fluidiquement le réservoir d'huile (24) au transfert d'huile tournant (15) en passant entre les satellites (28).

3. Système propulsif (1) selon l'une des revendications 1 ou 2, dans lequel le transfert d'huile tournant (15) comprend une partie tournante (16) montée sur l'arbre de soufflante (13) et une partie fixe (17) montée sur le porte-satellites (21).

4. Système propulsif (1) selon l'une des revendications 1 à 3, dans lequel le transfert d'huile tournant (15) est positionné radialement à l'intérieur par rapport à l'arbre de soufflante (13).

5. Système propulsif (1) selon l'une des revendications 1 à 4, dans lequel le transfert d'huile tournant (15) est plus proche de l'axe de rotation (X) que l'arbre de soufflante (13).

6. Système propulsif (1) selon l'une des revendications 1 à 5 comprenant en outre un mécanisme de changement de pas (46) des aubes (11) de la soufflante (2) et une servitude (23) connectant fluidiquement le transfert d'huile tournant (15) au mécanisme de changement de pas (43).

7. Système propulsif (1) selon l'une des revendications 1 à 6, dans lequel le mécanisme de réduction présente un rapport de réduction supérieur ou égal à 4.5.

8. Système propulsif (1) selon la revendication 7 comprenant un système propulsif (1) non caréné, le rapport de réduction étant supérieur ou égal à 6.

9. Système propulsif (1) selon l'une des revendications 7 ou 8, dans lequel la première portion (38) et la deuxième portion (39) des satellites (28) comprennent chacune des dents hélicoïdales.

10. Système propulsif (1) selon la revendication 9, dans lequel les dents hélicoïdales de la première portion des satellites forme un angle compris entre 10° et 30° avec l'axe de rotation (X), de préférence compris entre 15° et 25°.

11. Système propulsif (1) selon l'une des revendications 9 ou 10, dans lequel les dents hélicoïdales (39) de la deuxième portion (39) des satellites (28) forment un angle compris entre 10° et 30° avec l'axe de rotation (X).

12. Système propulsif (1) selon l'une des revendications 8 à 11 présentant un taux de dilution supérieur ou égal à 40 et inférieur ou égal à 80.

13. Aéronef comprenant un système propulsif (1) aéronautique selon l'une des revendications 1 à 12.

## Patentansprüche

1. Luftfahrt-Triebwerkssystem (1) mit:
- einer Antriebswelle (10), die um eine Drehachse (X) drehbar ist,
- einem Gebläse (2),
- einer Gebläsewelle (13), die so konfiguriert ist, dass sie das Gebläse in Drehung um die Drehachse (X) antreibt,
- einem Untersetzungsmechanismus (12), der die Antriebswelle (10) und die Gebläsewelle (13) koppelt,
wobei das Antriebssystem (1) **dadurch gekennzeichnet ist, dass** der Untersetzungsmechanismus (12) zwei Untersetzungsstufen (27, 32) umfasst, die umfassen:
- ein Sonnenrad (33), das auf der Drehachse (X) zentriert und so konfiguriert ist, dass es von der Antriebswelle (10) in Drehung versetzt wird,
- einen Kranz (25), der koaxial mit dem Sonnenrad (33) ist und so konfiguriert ist, dass er die Gebläsewelle (13) um die Drehachse (X) in Drehung versetzt, und
- eine Reihe von Satelliten (28), die in Umfangsrichtung um die Drehachse (X) zwischen dem Sonnenrad (33) und dem Kranz (25) verteilt sind, wobei jedes Satellitenrad (28) einen ersten Abschnitt (38) umfasst, der die erste Untersetzungsstufe (27) bildet, die mit dem Sonnenrad (33) in Eingriff steht, und einen zweiten Abschnitt (39), der die zweite Untersetzungsstufe (32) bildet, die mit dem Hohlrad (25) in Eingriff steht, wobei ein Durchmesser des ersten Abschnitts (38) von einem Durchmesser des zweiten Abschnitts (39) verschieden ist,
und dass das Antriebssystem (1) ferner einen drehbaren Öltransfer (15) umfasst, der zwischen dem Gebläse und dem Untersetzungsmechanismus (12) positioniert ist.

2. Antriebssystem (1) nach Anspruch 1, wobei die Reihe von Satelliten (28) auf einem Satellitenträger (21) montiert ist, der in Bezug auf einen Statorteil (3) des Antriebssystems (1) feststehend ist, und das Antriebssystem (1) ferner einen Öltank (24) und mindestens eine Rohrleitung (22) umfasst, wobei die Rohrleitung (22) den Öltank (24) fluidisch mit dem rotierenden Öltransfer (15) verbindet, indem sie zwischen den Satelliten (28) hindurchgeht.

3. Antriebssystem (1) nach einem der Ansprüche 1 oder 2, wobei der rotierende Öltransfer (15) einen rotierenden Teil (16), der an der Gebläsewelle (13) angebracht ist, und einen stationären Teil (17), der am Planetenträger (21) angebracht ist, umfasst.

4. Antriebssystem (1) nach einem der Ansprüche 1 bis 3, wobei der rotierende Öltransfer (15) radial innen in Bezug auf die Gebläsewelle (13) positioniert ist.

5. Antriebssystem (1) nach einem der Ansprüche 1 bis 4, wobei der rotierende Öltransfer (15) näher an der Rotationsachse (X) liegt als die Gebläsewelle (13).

6. Antriebssystem (1) nach einem der Ansprüche 1 bis 5, das außerdem einen Mechanismus zur Änderung der Steigung (46) der Schaufeln (11) des Gebläses (2) und eine Rohrleitung (23) umfasst, die den rotierenden Öltransfer (15) mit dem Mechanismus zur Änderung der Steigung (43) fluidisch verbindet.

7. Antriebssystem (1) nach einem der Ansprüche 1 bis 6, wobei der Untersetzungsmechanismus ein Untersetzungsverhältnis von größer oder gleich 4,5 aufweist.

8. Antriebssystem (1) nach Anspruch 7, das ein nicht stromlinienförmiges Antriebssystem (1) umfasst, wobei das Übersetzungsverhältnis größer oder gleich 6 ist.

9. Antriebssystem (1) nach einem der Ansprüche 7 oder 8, wobei der erste Abschnitt (38) und der zweite Abschnitt (39) der Planetenräder (28) jeweils schraubenförmige Zähne umfassen.

10. Antriebssystem (1) nach Anspruch 9, wobei die schraubenförmigen Zähne des ersten Abschnitts der Satelliten einen Winkel zwischen 10° und 30° mit der Drehachse (X) bilden, vorzugsweise zwischen 15° und 25°.

11. Antriebssystem (1) nach einem der Ansprüche 9 oder 10, wobei die schraubenförmigen Zähne (39) des zweiten Abschnitts (39) der Planetenräder (28) einen Winkel zwischen 10° und 30° mit der Drehachse (X) bilden.

12. Antriebssystem (1) nach einem der Ansprüche 8 bis 11 mit einem Verdünnungsverhältnis von größer oder gleich 40 und kleiner oder gleich 80.

13. Luftfahrzeug mit einem Luftfahrzeug-Antriebssystem (1) nach einem der Ansprüche 1 bis 12.

## Claims

1. An aeronautical propulsion system (1) comprising:
- a drive shaft (10) rotatable about an axis of rotation (X),
- a fan (2),
- a fan shaft (13) configured to drive the fan in rotation about the axis of rotation (X),
- a reduction mechanism (12) coupling the drive shaft (10) and the fan shaft (13),
the propulsion system (1) being **characterised in that** the reduction mechanism (12) comprises two reduction stages (27, 32) comprising:
- a sun gear (33), centred on the axis of rotation (X) and configured to be driven in rotation by the drive shaft (10),
- a ring gear (25), coaxial with the sun gear (33) and configured to drive the fan shaft (13) in rotation about the axis of rotation (X), and
- a series of satellites (28) distributed circumferentially about the axis of rotation (X) between the sun gear (33) and the ring gear (25), each satellite (28) comprising a first portion (38) forming the first reduction stage (27) meshed with the sun gear (33) and a second portion (39) forming the second reduction stage (32) meshed with the ring gear (25), a diameter of the first portion (38) being different from a diameter of the second portion (39),
and **in that** the propulsion system (1) further comprises an oil transfer bearing (15) positioned between the fan and the reduction mechanism (12).

2. The propulsion system (1) of claim 1, wherein the array of satellites (28) is mounted on a planet carrier (21) which is fixed relative to a stator portion (3) of the propulsion system (1) and the propulsion system (1) further comprises an oil tank (24) and at least one pipeline (22), the pipeline (22) fluidly connecting the oil tank (24) to the oil transfer bearing (15) by passing between the satellites (28).

3. A propulsion system (1) according to one of claims 1 or 2, wherein the oil transfer bearing (15) comprises a rotating part (16) mounted on the fan shaft (13) and a fixed part (17) mounted on the planet carrier (21).

4. A propulsion system (1) according to any of claims 1 to 3, wherein the oil transfer bearing (15) is positioned radially inwardly of the fan shaft (13).

5. A propulsion system (1) according to any of claims 1 to 4, wherein the oil transfer bearing (15) is closer to the axis of rotation (X) than the fan shaft (13).

6. Propulsion system (1) according to one of claims 1 to 5 further comprising a pitch change mechanism (46) for the blades (11) of the fan (2) and a pipe (23) fluidly connecting the oil transfer bearing (15) to the pitch change mechanism (43).

7. Propulsion system (1) according to one of claims 1 to 6, wherein the reduction mechanism has a reduction ratio greater than or equal to 4.5.

8. Propulsion system (1) as claimed in claim 7 comprising a unshrouded propulsion system (1), the reduction ratio being greater than or equal to 6.

9. Propulsion system (1) according to one of claims 7 or 8, wherein the first portion (38) and the second portion (39) of the satellites (28) each comprise helical teeth.

10. Propulsion system (1) according to claim 9, in which the helical teeth of the first portion of the satellites form an angle of between 10° and 30° with the axis of rotation (X), preferably of between 15° and 25°.

11. Propulsion system (1) according to one of claims 9 or 10, in which the helical teeth (39) of the second portion (39) of the satellites (28) form an angle of between 10° and 30° with the axis of rotation (X).

12. Propulsion system (1) according to one of claims 8 to 11 having a bypass ratio greater than or equal to 40 and less than or equal to 80.

13. Aircraft comprising an aeronautical propulsion system (1) according to one of claims 1 to 12.
